# EUROPÄISCHE PATENTSCHRIFT

(11) **EP 2 607 769 B1**
(45) Veröffentlichungstag und Bekanntmachung des Hinweises auf die Patenterteilung: **30.05.2018**
(21) Anmeldenummer: 12197914.0
(22) Anmeldetag: 18.12.2012
(51) Int. Cl.: F16L 37/084, F16L 37/098

(54) **Verbindungseinheit und eine derartige Verbindungseinheit umfassende Verbindungsanordnung zur Herstellung einer unlösbaren Verbindung medienführender Leitungen**
Connection unit and connection assembly comprising such a connection unit for producing a permanent connection between lines containing media
Unité de raccordement et une telle unité de raccordement comprenant un agencement de connexion pour la fabrication d'une liaison inamovible de conduites de transport

(30) Priorität: 20.12.2011 DE 102011089100
(43) Veröffentlichungstag der Anmeldung: 26.06.2013
(73) Patentinhaber: Fränkische Industrial Pipes GmbH & Co. KG, 97486 Königsberg (DE)
(72) Erfinder: Schröter, Sören, 96103 Hallstadt (DE); Willner, Mario, 97461 Reckertshausen (DE)
(74) Vertreter: Weickmann & Weickmann PartmbB

(56) Entgegenhaltungen:
- EP-A1- 0 566 889
- EP-A1- 0 806 597
- EP-A1- 2 497 991
- DE-A1- 3 734 948
- DE-A1- 19 722 842

## Beschreibung

Die Erfindung betrifft eine Verbindungseinheit gemäß dem Oberbegriff des Anspruchs 1.

An dieser Stelle sei darauf hingewiesen, dass sich die Angaben in axialer Richtung" und "in radialer Richtung" stets Angaben sind, die sich auf die Längsachse der Verbindungseinheit beziehen. Mit Bezug auf die "Öffnungsrichtung" des Aufnahmeraums sei angemerkt, dass sich diese entgegengesetzt zur "Einführrichtung" des Anschlussstutzens in den Aufnahmeraum erstreckt. Zudem bedeutet die Angabe "in axialer Richtung befestigt" lediglich, dass das fragliche Teil in Öffnungsrichtung des Aufnahmeraums nicht vom Grundkörper abgezogen werden kann, jedoch nicht notwendigerweise, dass dass die beiden Teile in axialer Richtung vollkommen starr aneinander festegelegt sind.

In jüngster Zeit wird der Einsatz von unlösbaren Verbindunganordnungen verstärkt gefordert, um eine unbewusste Demontage oder den Versuch von Manipulationen an den Verbindungsanordnungen verhindern zu können. Diese Forderung wird insbesondere für Niederemissionsfahrzeuge erhoben, beispielsweise von der CARB-Zulassungsbehörde (CARB - California Air Resources Board) für den Einsatz von Automobilen und Motorrädern.

Derartige unlösbare Verbindungsanordnungen und Verbindungseinheiten sind an sich bekannt. Zumindest einige ihrer Komponenten, insbesondere die Hülse oder/und die Halteinheit, werden vorzugsweise als Spritzgussteile aus Kunststoff gefertigt. Sie haben jedoch alle den Nachteil, dass insbesondere die Spritzgussfertigung der Hülse aufwändig ist und die für die Unlösbarkeit verantwortliche Haltekraft nicht mit der gewünschten Präzision reproduziert werden kann.

Eine lösbare Verbindungsanordnung ist aus der DE-A-19722842 bekannt, welche einen Grundkörper, eine Hülse und eine Halteeinheit umfasst. Dabei wird die Hülse auf den Grundkörper aufgesetzt und die Halteeinheit in die Hülse eingesetzt. Ein mit der Verbindungsanordnung zu verbindender Anschlussstutzen wird in die Verbindungsanordnung eingeführt, so dass er mit der Halteeinheit in Eingriff tritt und an die Verbindungsanordnung axial gesichert ist. Diese Verbindungsanordnung entspricht dem Oberbegriff des Anspruchs 1.
Ferner sei an dieser Stelle auf die Dokumente EP-A-0806597, DE-A-3734948, EP-A-0566889 und EP-A-2497991 verwiesen.

Zur Ausbildung der nach radial innen offenen Umfangsnut der Hülse zur Aufnahme der Halteeinheit werden üblicherweise sogenannte Einfallkerne verwendet, wie sie beispielsweise aus der DE 10 2007 039 368 A1 bekannt sind. Diese Einfallkerne verfügen üblicherweise über einen Zentralkörper, an dem wenigstens drei Hauptsegmente und wenigstens drei Zwischensegmente über zur Längsachse des Zentralkörpers geneigt verlaufende Schwalbenschwanzführungen verschiebbar gelagert sind. Die Hauptsegmente verfügen über einen größere Umfangswinkelerstreckung als die Zwischensegmente. Der Neigungswinkel ihrer Führungen ist hingegen geringer als jener der Führungen der Zwischensegmente. Grundsätzlich sind zwar nach Angaben des Herstellers Durchmesser bis hinunter zu 10 mm möglich. Aufgrund des vorstehend erläuterten Aufbaus sieht man aber leicht ein, dass Einfallkerne mit einem derartig kleinen Durchmesser nicht nur schwer herzustellen sind und damit in der Anschaffung zwangsläufig hohe Kosten nach sich ziehen, sondern zudem im Betrieb äußerst störanfällig sind.

Eine Aufgabe der Erfindung besteht daher darin, die Konstruktion der Verbindungseinheit der eingangs genannten Art derart weiterzubilden, dass sich eine vereinfachte Fertigbarkeit, vorzugsweise bei im Betrieb geringer Störanfälligkeit, ergibt, und dies vorzugsweise auch bei kleinen Innendurchmessern der Hülse, d.h. bei Innendurchmessern von 15 mm und weniger.

Diese Aufgabe wird erfindungsgemäß durch eine Verbindungseinheit gemäß Anspruch 1 gelöst.

In einer Weiterbildung der vorliegenden Erfindung kann die nach radial innen offene Umfangsnut der Hülse in wenigstens zwei Umfangsabschnitten zu einer axialen Stirnfläche der Hülse hin offen sein, und zwar vorzugsweise bis zum Nutgrund hinunter. Durch diese Maßnahme ist es möglich, zur Herstellung der Verbindungseinheit einen Einfallkern zu verwenden, der lediglich über relativ zu einem Zentralkörper verschiebbar gelagerte Hauptsegmente verfügt, während die Zwischensegmente mit dem Zentralkörper starr verbunden, vorzugsweise mit diesem einstückig ausgebildet sein können. Die Abformung der starren Zwischensegmente in dem eingespritzten Kunststoff können den zur axialen Stirnfläche der Hülse hin offenen Umfangsabschnitten der axialen Begrenzungswandung der Umfangsnut entsprechen. Durch die geringere Anzahl an beweglichen Teilen können auch Einfallkerne geringen Durchmessers mechanisch robust und somit kostengünstig gefertigt werden und verfügen im Betrieb über eine geringe Störanfälligkeit.

Um die Halteeinheit sicher in der Aufnahmenut halten zu können, kann die Halteeinheit eine Mehrzahl von von einem Basiselement der Halteeinheit bezogen auf die Längsachse nach radial innen abstehenden Federelementen umfassen. Die Federelemente sind dazu bestimmt, nach dem Einführen des Anschlussstutzens in den Aufnahmeraum im Zusammenwirken mit der Außenumfangsfläche des Anschlussstutzens eine nach radial außen gerichtete Kraft auf das Basiselement auszuüben, welche das Basiselement in die Umfangsnut hineindrückt. Vorzugsweise ist die Mehrzahl von Federelementen über den Umfang des Basiselements gleichmäßig verteilt angeordnet.

Um die Halteeinheit in einfacher Weise in die Umfangsnut einlegen zu können, wird vorgeschlagen, das Basiselement in Form eines geschlitzten Rings auszubilden. Durch Schließen des Schlitzes kann der Umfang des Basiselements und damit sein Durchmesser derart verringert werden, dass es problemlos in die Umfangsnut eingeführt werden kann.

In Weiterbildung wird vorgeschlagen, dass die Federelemente als Widerhakenelements ausgebildet sind und die zur Öffnungsrichtung entgegengesetzt gerichtete weitere Anlagefläche der Halteeinheit aufweisen. Genauer gesagt bildet die Summe der zur Öffnungsrichtung entgegengesetzt gerichteten Stirnflächen der Federelemente zusammen die weitere Anlagefläche der Halteeinheit. Ferner kann die in Öffnungsrichtung des Aufnahmeraums gerichtete Anlagefläche der Halteeinheit an deren Basiselement ausgebildet sein, und die zugehörige Gegenanlagefläche von einer Begrenzungsfläche der Umfangsnut der Hülse gebildet sein.

In diesem Zusammenhang kann durch die geschlitzte Ausführung des Basiselements noch eine weitere Funktion realisiert werden, und zwar eine Sicherung des Basiselements gegen ein unbeabsichtigtes Verdrehen in Umfangsrichtung um die Längsachse. Könnte sich das Basiselement in der Umfangsnut beliebig Verdrehen, so könnte es nämlich geschehen, dass wenigstens eines der Widerhakenelemente sich in einem Umfangsabschnitt befindet, in dem die axiale Begrenzungswandung der Umfangsnut zur axialen Stirnfläche der Hülse hin offen ist. In diesem Fall könnte die auf den Anschlussstutzen einwirkenden Auszugskräfte nicht in einem im Wesentlichen geradlinig verlaufenden Kraftfluss vom Anschlussstutzen in die Widerhakenelemente und von dort über das Basiselement weiter in die Begrenzungswandung der Hülse eingeleitet werden, sondern müssten im Basiselement einen "Umweg" in Umfangsrichtung nehmen. Dies würde die Kraftübertragung insgesamt schwächen, da hierdurch das Basiselement nicht nur auf Druck, sondern auch auf Scherung belastet werden würde.

Die Verdrehsicherung kann beispielsweise durch einen Vorsprung gebildet sein, der an einer vorbestimmten Umfangsposition vom Grund der Umfangsnut nach radial innen absteht. Durch den Eingriff der freien Enden des geschlitzten Basiselements mit diesem Vorsprung kann das Basiselement innerhalb vorbestimmter Toleranzgrenzen, die durch die Abmessungen des Schlitzes und der Abmessung des Vorsprungs in Umfangsrichtung bestimmt sind, in einer gewünschten Relativlage zur Hülse gehalten werden. Diese gewünschte Relativlage ist vorzugsweise derart gewählt, dass jedes der Widerhakenelemente einem Wandungsabschnitt der axialen Begrenzungswandung der Umfangsnut zugeordnet ist.

Der Verdrehsicherungsvorsprung kann in einfacher Weise an einer Umfangsposition ausgebildet sein, an der bezogen auf den Einfallkern ein starr mit dem Zentralkörper verbundenes Zwischensegment des Einfallkerns angeordnet ist, d.h. an einer Umfangsposition, an der die axiale Begrenzungswandung der Umfangsnut eigentlich zur axialen Stirnfläche der Hülse hin offen wäre. Durch den Verdrehsicherungsvorsprung kann diese Öffnung jedoch verschlossen oder zumindest teilweise verschlossen sein. Wenn in Umfangsrichtung auf beiden Seiten des Verdrehsicherungsvorsprungs noch eine Restöffnung verbleibt, so stellt dies eine optische Anzeige für die Position des Verdrehsicherungsvorsprungs dar, die das Einsetzen der Halteeinheit erleichtert.

In Weiterbildung der Erfindung wird ferner vorgeschlagen, dass die Halteeinheit aus einem weicheren Material gefertigt ist als die Hülse, vorzugsweise aus einem weicheren Kunststoff gefertigt ist als die Hülse.

Erfindungsgemäß ist wenigstens ein zur axialen Befestigung der Hülse am Grundkörper vorgesehenes Befestigungselement als Rastelement ausgebildet mit einem mit der Hülse verbundenen und sich von dort entgegen der Öffnungsrichtung des Aufnahmeraums in axialer Richtung erstreckenden Federsteg und einer von dem freien Ende des Federstegs nach radial innen abstehenden Rastnase, welche zum Eingriff in eine am Grundkörper ausgebildete Rastvertiefung bestimmt ist. Vorteilhafterweise kann die Hülse eine Mehrzahl von Befestigungselementen aufweisen, welche vorzugsweise alle als Rastelemente ausgebildet sind.

Durch diese Konstruktion können die Formhohlräume der Spritzgussform zur Ausbildung der Rastelemente von zwei Formelementen gebildet werden, welche zum Öffnen und Schließen der Form ausschließlich in axialer Richtung bewegt zu werden brauchen. Dies erleichtert die Herstellung auch unabhängig von der eingangs diskutierten Ausgestaltung der Verbindungseinheit. Aber auch in Verbindung mit der eingangs diskutierten Ausgestaltung der Verbindungseinheit ergeben sich Herstellungsvorteile. Und zwar braucht der Zentralkörper des Einfallkerns zur Ausbildung der Umfangsnut an seinem freien Ende lediglich mit Zylinderabschnitten entsprechend abgestufter Durchmesser ausgebildet zu sein, während die eigentlichen Formhohlräume zur Ausbildung der Rastelemente an einem zweiten Formkörper ausgebildet sind, der von der entgegengesetzten Seite mit dem freien Ende des Einfallkerns in Eingriff gebracht wird.

Zur weiteren Erleichterung der Herstellung bzw. zur weiteren Vereinfachung der Konstruktion des Spritzgusswerkzeugs kann vorgesehen sein, dass das Rastelement dem der Öffnung des Aufnahmeraums abgewandten Ende der Hülse benachbart vorgesehen ist.

Um die Rastelemente trotz der erfindungsgemäßen Ausbildung vor einer Beschädigung im Zuge des Einführens des Anschlussstutzens schützen zu können, ist es erfindungsgemäß, dass eine nach radial innen abstehende Ringrippe der Hülse, von welcher radial innen der sich in Axialrichtung erstreckende Federsteg des Rastelements ausgeht, gleichzeitig als Einführbegrenzungsanschlagfläche für den Anschlussstutzen dient.

In Weiterbildung beider Gescihtspunkte der Erfindung kann der Grundkörper der Umfangsnut der Hülse im montierten Zustand von Grundkörper und Hülse radial gegenüberliegend wenigstens eine Umfangsnut zur Aufnahme eines Dichtungselements, beispielsweise eines O-Rings, aufweisen.

Ferner kann der Grundkörper an seiner Außenumfangsfläche eine nach radial außen abstehende Ringrippe aufweist, welche als Anschlag für die Halteeinheit dient, der deren Aufschiebbewegung auf den Grundkörper begrenzt.

Um eine unerwünschte Manipulation des wenigstens einen Halteelements von außen verhindern zu können, kann die Hülse eine über ihren gesamten Umfang geschlossene Außenumfangsfläche aufweisen.

Nachzutragen ist noch, dass der Grundkörper aus Kunststoff gefertigt sein kann, beispielsweise aus Polyamid, insbesondere als Spritzgussteil. Er kann jedoch auch aus Metall gefertigt sein, beispielsweise aus Messing. Die Hülse mit der an ihr einstückig ausgebildeten Halteeinheit kann vorzusgweise aus Kunststoff, insbesondere als Spritzgussteil, hergestellt sein.

Wie eingangs erwähnt, betrifft die Erfindung schließlich auch noch eine Verbindungsanordnung, umfassend eine erfindungsgemäße Verbindungseinheit und einen Anschlussstutzen mit einem Ringflansch, der mit der Halteeinheit in Halteeingriff bringbar ist.

Die Erfindung wird im Folgenden anhand der beigefügten Zeichungen an einem Ausführungsbeispiel näher erläutert werden. Es stellt dar:
- Figur 1: eine Explosionsdarstellung der einzelnen Bauteile einer erfindungsgemäßen Verbindungseinheit bzw. Verbindungsanordnung;
- Figur 2: einen Längsschnitt der Verbindungseinheit bzw. Verbindungsanordnung gemäß Figur 1 im montierten Zustand der Verbindungsanordnung;
- Figur 3: ein vergrößertes Detail der Darstellung gemäß Figur 2, allerdings längs der Linie III-III in Figur 4 genommen;
- Figur 4: eine längs der Linie IV-IV in Figur 2 genommene Schittansicht der Verbindungsanordnung gemäß Figur 2;
- Figur 5: eine längs der Linie V-V in Figur 2 genommene Stirnansicht alleine der Hülse; und
- Figur 6: eine Stirnansicht eines Einfallkerns, wie er bei der Spritzguss-Herstellung der Hülse gemäß Figur 5 zum Einsatz kommt.

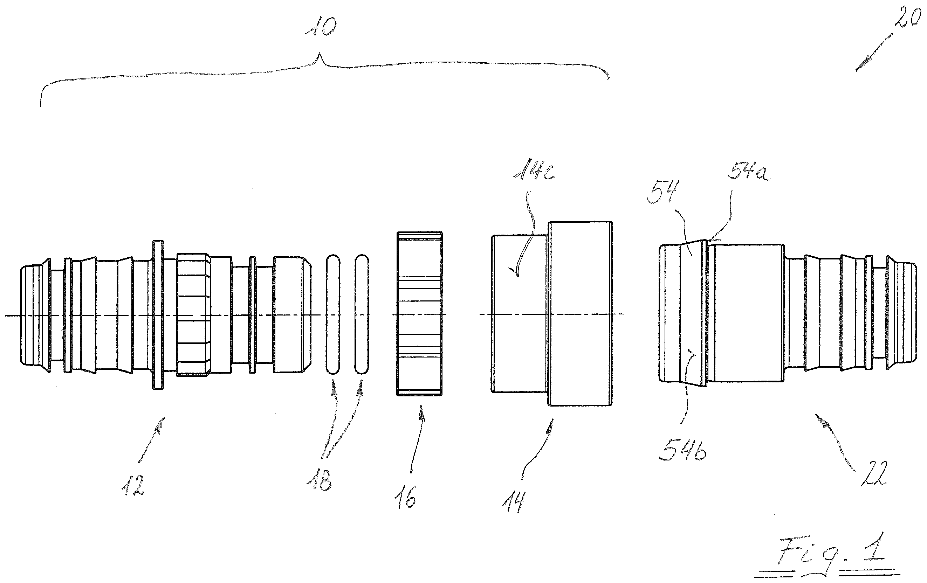

In Figur 1 ist eine erfindungsgemäße Verbindungseinheit allgemein mit 10 bezeichnet. Sie umfasst einen Grundkörper 12, eine Hülse 14, eine Halteeinheit 16 und zwei als O-Ringe ausgebildete Dichtungselemente 18. Die Verbindungseinheit 10 ist zur dichtenden Verbindung mit einem Anschlussstutzen 22 ausgebildet und bestimmt, mit dem zusammen sie eine Verbindungsanordnung 20 bildet.

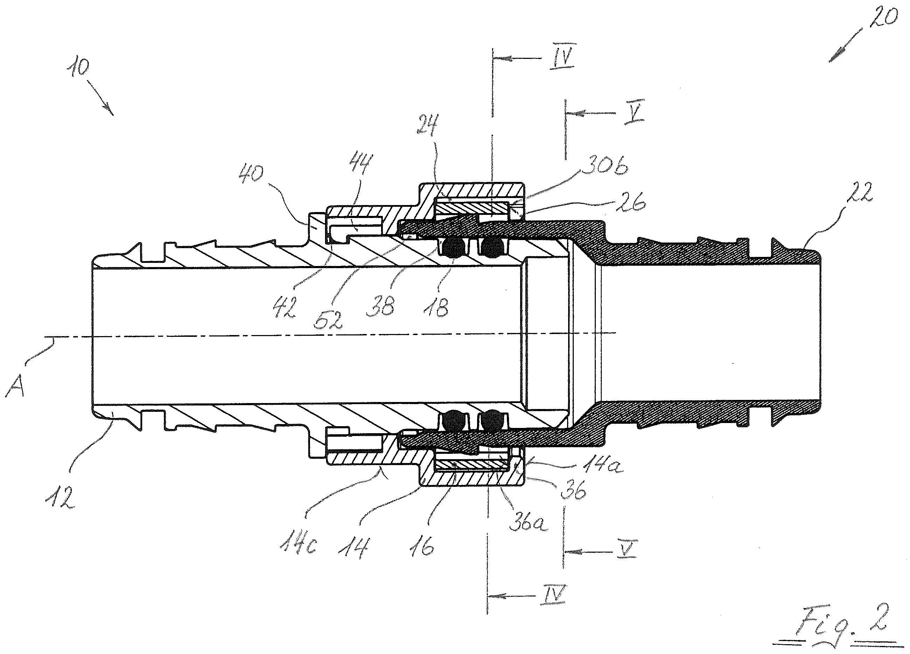

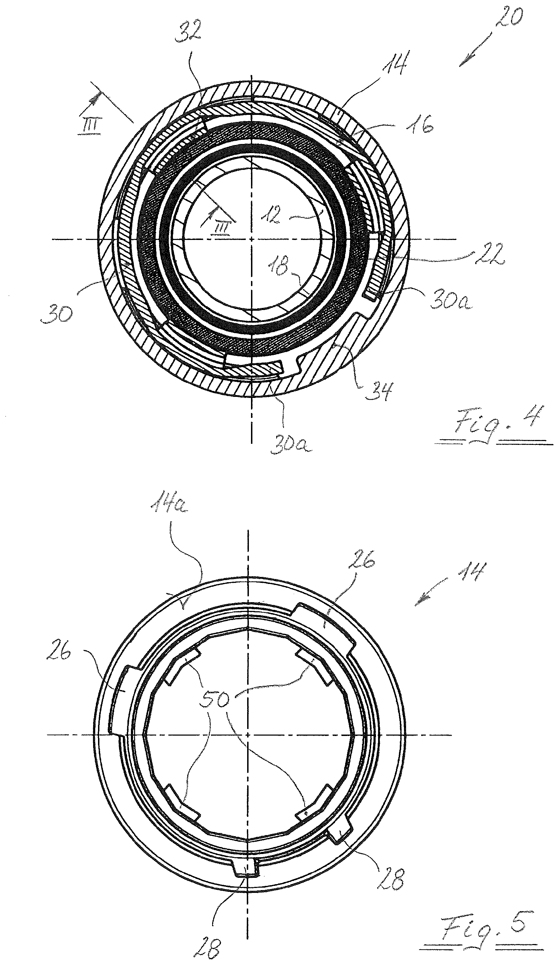

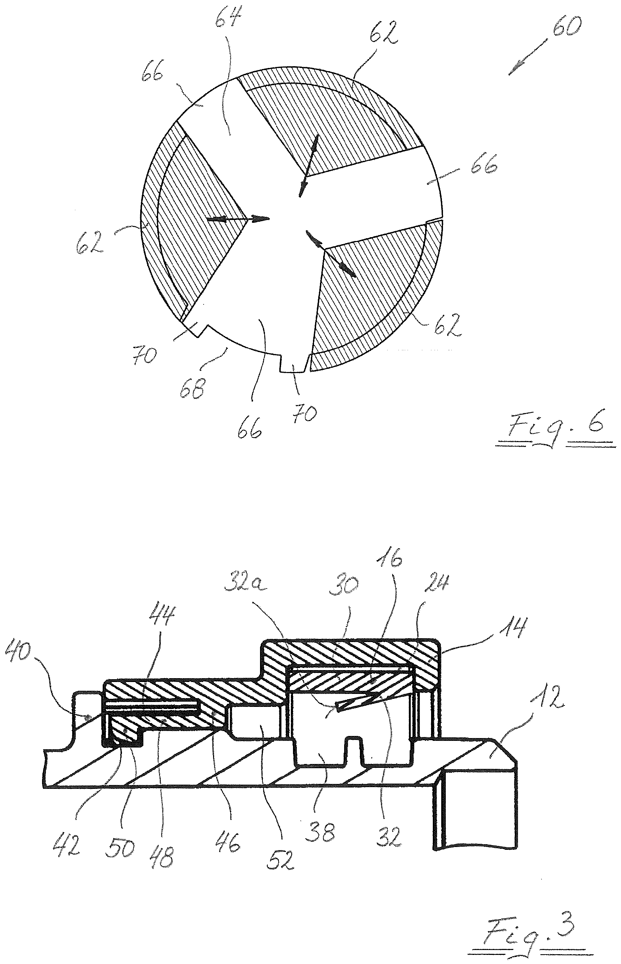

Wie in den Figuren 2 und 3 dargestellt ist, ist die Halteeinheit 16 im montierten Zustand der Verbindungseinheit 10 in einer Umfangsnut 24 der Hülse 14 aufgenommen. Die Umfangsnut 24 ist zum Einführen der Halteeinheit 16 nach radial innen offen. Zudem weist sie zur axialen Stirnfläche 14a der Hülse 14 hin offene Umfangsabschnitte 26 und 28 auf (siehe auch Figur 5). Diese offenen Umfangsabschnitte 26, 28 sind fertigungsbedingt, worauf nachstehend mit Bezug auf Figur 6 noch näher eingegangen werden wird.

Wie man in Figur 4 sieht, ist die Halteeinheit 16 als geschlitzter Ring ausgebildet. Genauer gesagt umfasst die Halteeinheit 16 ein als geschlitzter Ring ausgebildetes Basiselement 30, von dem nach radial innen drei Federelemente 32 abstehen (siehe auch Figur 3). Die Federelemente 32 sind dabei als Widerhakenelemente ausgebildet, die mit ihrem einen Ende mit dem Basiselement 30 einstückig verbunden sind und mit zunehmendem Längsabstand von ihrem mit dem Basiselement 30 verbundenen Ende auf ihr freies Ende zu von dem Basiselement 30 einen größeren radialen Abstand aufweisen.

Bereits an dieser Stelle sei darauf hingewiesen, dass die freien Enden 30a des Basiselements 30 einem von der Hülse 14 nach radial innen abstehenden Vorsprung 34 in Umfangsrichtung gegenüberliegen. Das Zusammenwirken der freien Enden 30a des Basiselements 30 mit diesem Vorsprung 34 stellt eine Verdrehsicherung für die Halteeinheit 16 dar. Diese Verdrehsicherung stellt sicher, dass die Widerhakenelemente 32 innerhalb gewisser Toleranzgrenzen sich stets an vorbestimmten Umfangspositionen um die Längsachse Ader Verbindungseinheit 10 bzw. der Verbindungsanordnung 20 befinden.

In Folge der geschlitzten Ausführung der Halteeinheit 16 kann der Außendurchmesser des Basiselements 30 durch einfaches Zusammendrücken unter Aufeinanderzubewegen seiner beiden freien Enden 30a so stark verringert werden, dass das Basiselement 30 an der axialen Begrenzungswandung 36 der Umfangsnut 24 der Hülse 14 vorüber in die Hülse 14 eingeführt werden kann, bis sie sich an einer der Umfangsnut 24 entsprechenden Längsposition befindet. In dieser Position kann sich das Basiselement 30 der Halteeinheit 16 in Folge der Eingenelastizität seines Materials wieder aufweiten und somit in die Umfangsnut 24 einlegen, wie in den Figuren 2 bis 4 dargestellt ist.

Zur Montage der Verbindungseinheit 10 wird die so vormontierte Baugruppe aus Hülse 14 und Halteeinheit 16 auf den Grundkörper 12 aufgeschoben, nachdem zuvor noch die beiden Dichtungselemente 18 in dafür vorgesehene Aufnahmenuten 38 des Grundkörpers 12 eingelegt worden sind. Das Aufschieben der Hülse 14 (einschließlich der Halteeinheit 16) auf den Grundkörper 12 wird durch einen radial vom Basiskörper 12 abstehenden Ringansatz 40 begrenzt, gegen den die Hülse 14 mit ihrem vorauslaufenden Ende 14b anläuft. Auf Seiten der Hülse 14 dem Ringansatz 40 benachbart, verfügt der Grundkörper 12 über eine Umfangsnut 42, die zum Zusammenwirken mit Rasthaken 44 der Hülse 14 bestimmt ist. Durch das Zusammenwirken der Rasthaken 44 mit der Umfangsnut 42 wird die Hülse 14 unlösbar an dem Grundkörper 12 festgelegt.

An dieser Stelle sei darauf hingewiesen, dass der Begriff "unlösbar" im Zusammenhang mit der vorliegenden Erfindung in dem Sinne zu verstehen ist, dass die Hülse 14 von dem Grundkörper 12 nur unter Beschädigungen der Bauelemente der Verbindungseinheit 10 wieder abgezogen werden kann. Anhand dieser Beschädigungen kann jedwede unsachgemäße Manipulation an der Verbindungseinheit 10 bzw. der Verbindungsanordnung 20 ohne Weiteres erkannt werden. Beschädigungsfrei kann die Hülse 14 nicht mehr vom Grundkörper 12 abgezogen werden.

Wie man in Figur 3 erkennt, weist die Hülse 14 eine nach radial innen abstehende Ringrippe 46 auf, von der radial innen sich in Axialrichtung erstreckende Federstege 48 der Rastelemente 44 ausgehen. An den freien Enden der Federstege 48 stehen in radialer Richtung nach innen weisende Rastnasen 50 auf, die in die Umfangsnut 42 eingreifen.

Wurde die Hülse 14 unter Verrastung der Rastelemente 44 in der Umfangsnut 42 des Grundkörpers 12 vollständig auf den Grundkörper 12 aufgeschoben, so begrenzen die Hülse 14 und der Grundkörper 12 zwischen sich einen Aufnahmeraum 52, der zur Stirnfläche 14a der Hülse 14 hin, d.h. in Figur 2 nach rechts, offen ist. Dieser Aufnahmeraum 52 dient zum Einführen des Anschlussstutzens 22 zur Herbeiführung des in Figur 2 dargestellten montierten Zustands der Verbindungsanordnung 20.

Der Anschlussstutzen 22 weist an seiner Außenumfangsfläche eine Ringrippe 54 auf (siehe Figur 1), deren axiale Stirnfläche 54a zum Zusammenwirken mit axialen Stirnflächen 32a an den freien Enden der Widerhakenelemente 32 der Halteeinheit 16 bestimmt ist. Die Stirnflächen 32a der freien Enden der Widerhakenelemente 32 bilden zusammen die weitere Anlagefläche im Sinne der vorliegenden Erfindung, während die axiale Stirnfläche 54a der Ringrippe 54 des Anschlussstutzens 22 die weitere Gegenanlagefläche im Sinne der vorliegenden Erfindung bildet.

Nachzutragen ist noch, dass die Ringrippe 54 des Anschlussstutzens 22 sich von der Verbindungseinheit 10 weg konisch erweiternd ausgebildet ist und somit eine Einweisungsfläche 54b bildet, welche die Widerhakenelemente 32 im Zuge des Einführens des Anschlussstutzens 22 in den Aufnahmeraum 52 nach radial außen auslenkt, bis sich die Ringrippe 54 an den Widerhakenelementen 32 vorbei bewegt hat, sodass die Widerhakenelemente 32 aufgrund der Eigenelastizität ihres Materials wieder nach radial innen zurückfedern können. In diesem fertig montierten Zustand der Verbindungsanordnung 20 liegen die axialen Stirnflächen 54a und 32a einander gegenüber.

An dieser Stelle sei ferner darauf hingewiesen, dass die Widerhakenelemente 32 in dieser Stellung an der Außenumfangsfläche des Anschlussstutzens 22 aufliegen, und ihre Eigenelastizität somit auf das Basiselement 30 eine radial nach außen gerichtete Kraft erzeugt, welche das Basiselement 30 in der Umfangsnut 24 sichert.

Ferner sei darauf hingewiesen, dass die Ringrippe 46 einen die Einführbewegung des Anschlussstutzens 20 in den Aufnahmeraum 52 begrenzenden Anschlag für den Anschlussstutzen 22 bildet.

Sollte ausgehend von dieser montierten Stellung der Verbindungsanordnung 20 versucht werden, den Anschlussstutzen 22 wieder aus dem Aufnahmeraum 52 herauszuziehen (in Figur 2 nach rechts), so treten zunächst die axialen Anlageflächen 54a und 32a miteinander in Kontakt, so dass die Halteeinheit 16 vom Anschlussstutzen 22 in Figur 2 nach rechts mitgenommen wird, bis sich die axiale Stirnfläche 30b des Basiselements 30 der Halteeinheit 16 gegen eine axiale Stirnfläche 36a der axialen Begrenzungswandung 36 der Umfangsnut 24 anlegt. Die axiale Stirnfläche 30b bildet dabei die eine Anlagefläche der Halteeinheit 16 im Sinne der Erfindung, während die axiale Stirnfläche 36a die eine Gegenanlagefläche der Hülse 14 bildet.

Gemäß Vorstehendem kann auch die Verbindung des Anschlussstutzens 22 mit der Hülse 14 unter Vermittlung der Halteeinheit 16 nur unter Beschädigung dieser Bauteile wieder gelöst werden. Auch diese Verbindung ist somit eine unlösbare Verbindung im Sinne der vorliegenden Erfindung. Die Unlösbarkeit kommt konstruktiv auch dadurch zum Ausdruck, dass die Außenumfangsfläche 14c der Hülse 14 über ihren gesamten Umfang geschlossen ausgebildet ist. Durch diese Maßnahme gibt es keine Möglichkeit, mit einem wie auch immer gearteten Werkzeug von außen auf die Halteeinheit 16 einzuwirken, um deren Eingriff mit der Hülse 14 oder/und dem Anschlussstutzen 22 zu lösen.

Durch den vorstehend beschriebenen Verdrehsicherungsansatz 34 wird sichergestellt, dass sich die Widerhakenelemente 32 an Umfangspositionen befinden, an denen die Umfangsnut 24 keinen der in Axialrichtung offenen Umfangsabschnitte 26, 28 aufweist. Durch diese Maßnahme kann jedwede Auszugskraft, die auf den Anschlussstutzen 22 ausgeübt wird, von diesem in einem im Wesentlichen geradlinigen Kraftfluss von den Widerhakenelementen 32 auf das Basiselement 30 der Halteeinheit 16 und von dort weiter in die axiale Begrenzungswandung 36 der Umfangsnut 24 der Hülse 14 eingeleitet werden. Dies beugt insbesondere einer Beschädigung der Halteeinheit 16 und insbesondere von deren Basiselement 30 vor.

Nachzutragen ist noch, dass die Halteeinheit 16 im Hinblick auf die von ihr geforderte Elastizität aus einem weicheren Material, insbesondere einem weicheren Kunststoff, gefertigt ist als die Hülse 14.

Mit Bezug auf die Figur 6 soll nun noch die Herstellung der Hülse 14, und insbesondere die Herstellung von deren Umfangsnut 24, näher erläutert werden. In Figur 6 ist ein Einfallkern 60 dargestellt, der in Abweichung von der üblichen Ausbildung von Einfallkernen mit drei Hauptsegmenten und drei Zwischensegmenten, die alle an einem Zentralkörper verschiebbar gelagert sind, wie sie aus der DE 10 2007 039 368 A1 bekannt ist, lediglich über drei Hauptsegmente 62 verfügt, die an einem Zentralkörper 64 des Einfallkerns 60 verschiebbar gelagert sind. Die Zwischensegmente 66 sind mit dem Zentralkörper 64 einstückig ausgebildet und somit relativ zu diesem umverlagerbar. Infolge der starren Verbindung der Zwischensegmente 66 mit dem Zentralkörper 64 des Einfallkerns 60 können mit dem Einfallkern 60 lediglich Umfangsnuten ausgebildet werden, die an vorbestimmten Umfangspositionen, welche den Positionen der Zwischensegmente 66 entsprechen, axial offen sind. Die Verwendung des Einfallkerns 60 gemäß Figur 6 bedingt somit das Vorhandensein der vorstehend angesprochenen Fenster 26, 28. Allerdings ist der Einfallkern 60 konstruktiv erheblich einfacher aufgebaut als der aus der DE 10 2007 039 368 A1 bekannt Einfallkern. Dies ermöglicht es, mit dem Einfallkern 60 auch Umfangsnuten 24 herzustellen, deren Nutgrunddurchmesser weniger als 15 mm beträgt, beispielsweise 12 mm.

In Figur 6 erkennt man ferner, dass eines der Zwischensegmente 66 über eine Vertiefung 68 verfügt. Diese dient zur Ausbildung des Verdrehsicherungsvorsprungs 34. Die beiden diese Ausnehmung 68 begrenzenden Vorsprünge 70 des Zwischensegments 66 bilden die Fenster 28 aus, so dass die Umfangsposition des Verdrehsicherungsansatzes 34 in einfacher Weise anhand der Position der Fenster 28 erkannt werden kann. Dies erleichtert das Einsetzen der Halteeinheit 16 in die Umfangsnut 24.

## Patentansprüche

1. Verbindungseinheit (10), umfassend:
• einen Grundkörper (12), der dazu ausgebildet und bestimmt ist, mit einem nicht Teil der Verbindungseinheit (10) bildenden Anschlussstutzen (22) verbunden zu werden,
• eine Hülse (14), die im montierten Zustand der Verbindungseinheit (10) an dem Grundkörper (12) in Richtung einer Längsachse (A) der Verbindungseinheit (10) befestigt ist und mit dem Grundkörper (12) einen zu ihrem freien Ende (14a) hin offenen Aufnahmeraum (52) bildet, der zur Aufnahme des Anschlussstutzens (22) bestimmt ist, und
• eine von der Hülse (14) gesondert ausgebildete Halteeinheit (16), welche in einer bezogen auf die Längsachse (A) nach radial innen offenen Umfangsnut (24) der Hülse (14) angeordnet ist,
wobei die Halteeinheit (16) eine in Öffnungsrichtung des Aufnahmeraums (52) gerichtete Anlagefläche (30b) aufweist, welche zum Zusammenwirken mit einer zur Öffnungsrichtung entgegengesetzt gerichteten Gegenanlagefläche (36a) der Hülse (14) bestimmt ist, und
wobei die Halteeinheit (16) ferner eine zur Öffnungsrichtung entgegengesetzt gerichtete weitere Anlagefläche (32a) aufweist, welche zum Zusammenwirken mit einer in Öffnungsrichtung gerichteten weiteren Gegenanlagefläche (54a) des Anschlussstutzens (22) bestimmt ist,
wobei wenigstens ein zur axialen Befestigung der Hülse (14) am Grundkörper (12) vorgesehenes Befestigungselement (44) als Rastelement ausgebildet ist mit einem mit der Hülse (14) verbundenen und sich von dort entgegen der Öffnungsrichtung des Aufnahmeraums (52) in axialer Richtung erstreckenden Federsteg (48) und einer von dem freien Ende des Federstegs (48) nach radial innen abstehenden Rastnase (50), welche zum Eingriff in eine am Grundkörper (12) ausgebildete Rastvertiefung (42) bestimmt ist,
**dadurch gekennzeichnet, dass** eine nach radial innen abstehende Ringrippe (46) der Hülse (14), von welcher radial innen der sich in Axialrichtung erstreckende Federsteg (48) des Rastelements (44) ausgeht, gleichzeitig als Einführbegrenzungsanschlag für den Anschlussstutzen (22) dient.

2. Verbindungseinheit (10), nach Anspruch 1,
**dadurch gekennzeichnet, dass** die nach radial innen offene Umfangsnut (24) der Hülse (14) in wenigstens zwei Umfangsabschnitten (26, 28) zu einer axialen Stirnfläche (14a) der Hülse (14) hin offen ist.

3. Verbindungseinheit nach Anspruch 1 oder 2,
**dadurch gekennzeichnet, dass** die Halteeinheit (16) eine Mehrzahl von von einem Basiselement (30) der Halteeinheit (16) bezogen auf die Längsachse (A) nach radial innen abstehenden Federelementen (32) umfasst.

4. Verbindungseinheit nach Anspruch 3,
**dadurch gekennzeichnet, dass** das Basiselement (30) in Form eines geschlitzten Rings ausgebildet ist.

5. Verbindungseinheit nach Anspruch 3 oder 4,
**dadurch gekennzeichnet, dass** die Federelemente (32) als Widerhakenelemente ausgebildet sind und die zur Öffnungsrichtung entgegengesetzt gerichtete weitere Anlagefläche (32a) der Halteeinheit (16) aufweisen.

6. Verbindungseinheit nach einem der Ansprüche 3 bis 5,
**dadurch gekennzeichnet, dass** die in Öffnungsrichtung des Aufnahmeraums (52) gerichtete Anlagefläche (30b) der Halteeinheit (16) an deren Basiselement (30) ausgebildet ist, und die zugehörige Gegenanlagefläche (36a) von einer Begrenzungsfläche der Umfangsnut (24) der Hülse gebildet ist.

7. Verbindungseinheit nach einem der Ansprüche 1 bis 6,
**dadurch gekennzeichnet, dass** an einer vorbestimmten Umfangsposition ein vom Grund der Umfangsnut (24) nach radial innen abstehender Verdrehsicherungsvorsprung (34) vorgesehen ist.

8. Verbindungseinheit nach einem der Ansprüche 1 bis 7,
**dadurch gekennzeichnet, dass** die Halteeinheit (16) aus einem weicheren Material gefertigt ist als die Hülse (14), vorzugsweise aus einem weicheren Kunststoff.

9. Verbindungseinheit nach einem der Ansprüche 1 bis 7,
**dadurch gekennzeichnet, dass** das Rastelement (44) dem der Öffnung des Aufnahmeraums (52) abgewandten Ende der Hülse (14) benachbart vorgesehen ist.

10. Verbindungseinheit nach einem der Ansprüche 1 bis 9,
**dadurch gekennzeichnet, dass** die Hülse (14) eine Mehrzahl von Befestigungselementen (44) aufweist, welche vorzugsweise alle als Rastelemente ausgebildet sind.

11. Verbindungseinheit nach einem der Ansprüche 1 bis 10,
**dadurch gekennzeichnet, dass** der Grundkörper (12) der Umfangsnut (24) der Hülse (14) im montierten Zustand von Grundkörper (12) und Hülse (14) radial gegenüberliegend wenigstens eine Umfangsnut (38) zur Aufnahme eines Dichtungselements (18) aufweist.

12. Verbindungseinheit nach einem der Ansprüche 1 bis 11,
**dadurch gekennzeichnet, dass** der Grundkörper (12) an seiner Außenumfangsfläche eine nach radial außen abstehende Ringrippe (40) aufweist, welche als Anschlag für die Halteeinheit (16) dient, der deren Aufschiebbewegung auf den Grundkörper (12) begrenzt.

13. Verbindungseinheit nach einem der Ansprüche 1 bis 12,
**dadurch gekennzeichnet, dass** die Hülse (14) eine über ihren gesamten Umfang geschlossene Außenumfangsfläche aufweist.

14. Verbindungsanordnung (20), umfassend eine Verbindungseinheit (10) nach einem der vorhergehenden Ansprüche und einen Anschlussstutzen (22) mit einem Ringflansch (54), der mit der Halteeinheit (16) in Halteeingriff bringbar ist.

## Claims

1. Connection unit (10), comprising:
• a main body (12) which is designed and intended to be connected to a connecting piece (22) which does not form part of the connection unit (10),
• a socket (14), which in the assembled state of the connection unit (10) is fastened to the main body (12) in the direction of a longitudinal axis (A) of the connection unit (10) and forms together with the main body (12) a receiving space (52) which is open towards the free end (14a) thereof and is intended to receive the connecting piece (22), and
• a retaining unit (16), which is formed separately from the socket (14) and is arranged in a circumferential groove (24) in the socket (14), which circumferential groove is open radially inwards relative to the longitudinal axis (A),
the retaining unit (16) having a contact surface (30b) which is directed in the opening direction of the receiving space (52) and is intended to co-operate with a counterpart contact surface (36a) of the socket (14) directed opposite to the opening direction,
and
the retaining unit (16) also having a further contact surface (32a) which is directed opposite to the opening direction and is intended to co-operate with a further counterpart contact surface (54a) of the connecting piece (22) directed in the opening direction,
at least one fastening element (44) provided for axially fastening the socket (14) to the main body (12) being designed as a latching element comprising a spring bar (48), which is connected to the socket (14) and extends therefrom in the axial direction opposite to the opening direction of the receiving space (52), and a latching lug (50), which projects radially inwards from the free end of the spring bar (48) and is intended to engage in a latching recess (42) formed in the main body (12), **characterised in that** a radially inwardly projecting annular rib (46) of the socket (14), from which the spring bar (48) of the latching element (44) extending in the axial direction extends radially inwards, simultaneously serves as an insertion limiting stop for the connecting piece (22).

2. Connection unit (10) according to claim 1,
**characterised in that** the radially inwardly open circumferential groove (24) in the socket (14) is open in at least two circumferential portions (26, 28) towards an axial end face (14a) of the socket (14).

3. Connection unit according to either claim 1 or claim 2,
**characterised in that** the retaining unit (16) comprises a plurality of spring elements (32) projecting radially inwards relative to the longitudinal axis (A) from a base element (30) of the retaining unit (16).

4. Connection unit according to claim 3,
**characterised in that** the base element (30) is designed in the form of a split ring.

5. Connection unit according to either claim 3 or claim 4,
**characterised in that** the spring elements (32) are designed as barb elements and comprise the further contact surface (32a) of the retaining unit (16) directed opposite to the opening direction.

6. Connection unit according to any of claims 3 to 5,
**characterised in that** the contact surface (30b) of the retaining unit (16) directed in the opening direction of the receiving space (52) is formed on the base element (30) of the retaining unit, and the associated counterpart contact surface (36a) is formed by a boundary surface of the circumferential groove (24) in the socket.

7. Connection unit according to any of claims 1 to 6,
**characterised in that** an anti-twist projection (34), which projects radially inwards from the base of the circumferential groove (24), is provided at a predetermined circumferential position.

8. Connection unit according to any of claims 1 to 7,
**characterised in that** the retaining unit (16) is made from a softer material than the socket (14), preferably from a softer plastics material.

9. Connection unit according to any of claims 1 to 7,
**characterised in that** the latching element (44) is provided so as to be adjacent to the end of the socket (14) remote from the opening of the receiving space (52).

10. Connection unit according to any of claims 1 to 9,
**characterised in that** the socket (14) has a plurality of fastening elements (44) which are preferably all designed as latching elements.

11. Connection unit according to any of claims 1 to 10,
**characterised in that** the main body (12) has at least one circumferential groove (38) for receiving a sealing element (18) radially opposite the circumferential groove (24) of the socket (14) in the assembled state of the main body (12) and the socket (14).

12. Connection unit according to any of claims 1 to 11,
**characterised in that** the main body (12) has on its outer circumferential surface a radially outwardly projecting annular rib (40) which serves as a stop for the retaining unit (16) which limits the fitting movement thereof onto the main body (12).

13. Connection unit according to any of claims 1 to 12,
**characterised in that** the socket (14) has an outer circumferential surface which is closed over its entire circumference.

14. Connection arrangement (20), comprising a connection unit (10) according to any of the preceding claims and a connecting piece (22) having an annular flange (54) which can be brought into retaining engagement with the retaining unit (16).

## Revendications

1. Unité de raccordement (10), comprenant :
- un corps de base (12), qui est réalisé pour et se destine à être raccordé à une tubulure de connexion (22) ne faisant pas partie de l'unité de raccordement (10),
- un manchon (14), qui est fixé dans l'état monté de l'unité de raccordement (10) au niveau du corps de base (12) en direction d'un axe longitudinal (A) de l'unité de raccordement (10) et qui forme avec le corps de base (12) un espace de logement (52) ouvert en direction de son extrémité (14a) libre, qui se destine à loger la tubulure de connexion (22), et
- une unité de maintien (16) réalisée séparément du manchon (14), laquelle est disposée dans une rainure périphérique (24) du manchon (14) ouverte vers l'intérieur radialement par rapport à l'axe longitudinal (A),
dans laquelle l'unité de maintien (16) présente une surface d'appui (30b) dirigée dans la direction d'ouverture de l'espace de logement (52), laquelle se destine à coopérer avec une contre-surface d'appui (36a), dirigée dans le sens opposé à la direction d'ouverture, du manchon (14), et
dans laquelle l'unité de maintien (16) présente en outre une autre surface d'appui (32a) dirigée dans le sens opposé à la direction d'ouverture, laquelle se destine à coopérer avec une autre contre-surface d'appui (54a), dirigée dans la direction d'ouverture, de la tubulure de connexion (22),
dans laquelle au moins un élément de fixation (44) prévu aux fins de la fixation axiale du manchon (14) au niveau du corps de base (12) est réalisé sous la forme d'un élément d'enclenchement avec une barrette à ressort (48) raccordée au manchon (14) et s'étendant depuis cet endroit dans une direction axiale dans le sens opposé à la direction d'ouverture de l'espace de logement (52) et avec un ergot d'enclenchement (50) faisant saillie vers l'intérieur radialement depuis l'extrémité libre de la barrette à ressort (48), lequel ergot d'enclenchement se destine à venir en prise avec un renfoncement d'enclenchement (42) réalisé au niveau du corps de base (12),
**caractérisée en ce qu'**une nervure annulaire (46), faisant saillie vers l'intérieur radialement, du manchon (14), depuis laquelle, à l'intérieur radialement, la barrette à ressort (48), s'étendant dans la direction axiale, de l'élément d'enclenchement (44) part, fait office dans le même temps de butée de délimitation d'introduction pour la tubulure de connexion (22).

2. Unité de raccordement (10) selon la revendication 1,
**caractérisée en ce que** la rainure périphérique (24) ouverte vers l'intérieur radialement du manchon (14) est ouverte dans au moins deux sections périphériques (26, 28) en direction d'une surface frontale (14a) axiale du manchon (14).

3. Unité de raccordement selon la revendication 1 ou 2,
**caractérisée en ce que** l'unité de maintien (16) comprend une pluralité d'éléments élastiques (32) faisant saillie vers l'intérieur radialement d'un élément de base (30) de l'unité de maintien (16) par rapport à l'axe longitudinal (A).

4. Unité de raccordement selon la revendication 3,
**caractérisée en ce que** l'élément de base (30) est réalisé sous la forme d'une bague fendue.

5. Unité de raccordement selon la revendication 3 ou 4,
**caractérisée en ce que** les éléments élastiques (32) sont réalisés sous la forme d'éléments de barbe et présentent la surface de butée (32a) supplémentaire, dirigée dans le sens opposé à la direction d'ouverture, de l'unité de maintien (16).

6. Unité de raccordement selon l'une quelconque des revendications 3 à 5,
**caractérisée en ce que** la surface de butée (30b), dirigée dans la direction d'ouverture de l'espace de logement (52), de l'unité de maintien (16) est réalisée au niveau de l'élément de base (30) de cette dernière, et la contre-surface de butée (36a) associée est formée par une surface de délimitation de la rainure périphérique (24) du manchon.

7. Unité de raccordement selon l'une quelconque des revendications 1 à 6,
**caractérisée en ce qu'**une partie faisant saillie de protection anti-rotation (34) faisant saillie vers l'intérieur radialement du fond de la rainure périphérique (24) est prévue au niveau d'une position périphérique prédéfinie.

8. Unité de raccordement selon l'une quelconque des revendications 1 à 7,
**caractérisée en ce que** l'unité de maintien (16) est fabriquée à partir d'un matériau plus souple que celui du manchon (14), de préférence à partir d'une matière plastique plus souple.

9. Unité de raccordement selon l'une quelconque des revendications 1 à 7,
**caractérisée en ce que** l'élément d'enclenchement (44) est prévu de manière adjacente à l'extrémité, opposée à l'ouverture de l'espace de logement (52), du manchon (14).

10. Unité de raccordement selon l'une quelconque des revendications 1 à 9,
**caractérisée en ce que** le manchon (14) présente une pluralité d'éléments de fixation (44), qui sont tous réalisés de préférence sous la forme d'éléments d'enclenchement.

11. Unité de raccordement selon l'une quelconque des revendications 1 à 10,
**caractérisée en ce que** le corps de base (12) de la rainure périphérique (24) présente, en vis-à-vis radialement du manchon (14) dans l'état monté du corps de base (12) et du manchon (14), au moins une rainure périphérique (38) servant à loger un élément d'étanchéité (18).

12. Unité de raccordement selon l'une quelconque des revendications 1 à 11,
**caractérisée en ce que** le corps de base (12) présente, au niveau de sa surface périphérique, une rainure annulaire (40) faisant saillie vers l'extérieur radialement, laquelle fait office de butée pour l'unité de maintien (16), qui délimite le déplacement par enfilement de cette dernière sur le corps de base (12).

13. Unité de raccordement selon l'une quelconque des revendications 1 à 12,
**caractérisée en ce que** le manchon (14) présente une surface périphérique extérieure fermée sur l'ensemble de sa périphérie.

14. Ensemble de raccordement (20) comprenant une unité de raccordement (10) selon l'une quelconque des revendications précédentes et une tubulure de connexion (22) avec une bride annulaire (54), qui peut être amenée dans une prise de maintien avec l'unité de maintien (16).
